Europäisches Patentamt

European Patent Office

Office européen des brevets

(11) Veröffentlichungsnummer: **0 159 501**
A2

# (12) EUROPÄISCHE PATENTANMELDUNG

(21) Anmeldenummer: 85102461.2

(22) Anmeldetag: 05.03.85

(51) Int. Cl.⁴: **B 01 D 50/00**

(30) Priorität: 27.03.84 CH 1543/84

(43) Veröffentlichungstag der Anmeldung: 30.10.85
Patentblatt 85/44

(84) Benannte Vertragsstaaten: **AT DE FR GB IT NL**

(71) Anmelder: **Wetter, Peter, Im Rigiblick 23,
CH-8621 Wetzikon (CH)**

(72) Erfinder: **Wetter, Peter, Im Rigiblick 23,
CH-8621 Wetzikon (CH)**

(74) Vertreter: **Blum, Rudolf Emil Ernst et al, c/o E. Blum &
Co Patentanwälte Vorderberg 11, CH-8044 Zürich (CH)**

(54) **Vorrichtung zum Ausscheiden von Feststoffen aus einem als Träger hierfür dienenden Luftstrom.**

(57) Die vom Luftstrom getragenen Feststoffe werden vom Kreiselgebläserotor (1, 2) entlang eines bogenförmigen Gebläsegehäuseteils (6) gefördert und gelangen dann durch Fliehkraft nach unten in eine bogenförmige Rinne (8). Diese Rinne (8) ist dem Bogenzentrum zu hin offen. Die groben Feststoffe bleiben in der Rinne (8) und gelangen zur Feststoff-Austragestelle (10). Die feinen, staubartigen Feststoffe gelangen mit dem Luftstrom (26) aus der Rinne (8) und werden an einem oberhalb der Rinne angeordneten Staubfilter (12, 13) abgesetzt. Wird dieser vom abgelagerten Filterkuchen gereinigt, fällt dieser auch in die Rinne oder wird mittels gesonderter Luftdüsen (19) auch zur Austragestelle (10) gefördert. Dadurch, daß die groben Feststoffe nicht in Richtung des oben liegenden Staubfilters (12, 13) sondern nach unten durch Fliehkraft entlang einer bogenförmigen Rinne (8) gefördert werden, können diese groben Feststoffe nicht mit dem mechanisch empfindlichen Staubfilter (13) in Berührung gelangen. Letzterer wird geschont. Die Fliehkraft dient allein oder trägt bei zur Förderung der groben Feststoffe zur Austragestelle (10).

- 1 -

Vorrichtung zum Ausscheiden von Feststoffen
aus einem als Träger hierfür dienenden Luftstrom

------------------------------------------------

Die Erfindung betrifft eine Vorrichtung zum
Ausscheiden von Feststoffen aus einem als Träger hierfür
dienenden Luftstrom mit einem als Kreiselgebläse ausgebildeten Transportventilator für den die Feststoffe tragenden Luftstrom und einer an den Austrittsstutzen des
Kreiselgebläses anschliessenden Auffangrinne für gröbere
erste Feststoffe und mit einem höher als die Auffangrinne
angeordneten Staubfilter für feinere zweite Feststoffe.

Mit einer solchen Vorrichtung können Feststoffe, z.B. aus Holz, Kunststoff, Sand oder Metall, die
in der verarbeitenden Industrie als Abfälle anfallen, gesammelt werden. Bei einer solchen bekannten Vorrichtung
ist die Auffangrinne für die gröberen ersten Feststoffe
als Wanne ausgebildet, die unmittelbar unterhalb des
Staubfilters liegt. Das Kreiselgebläse wirft die gesamten
Feststoffe in diese Wanne, wobei die gröberen ersten
Feststoffe im Wannenboden zu liegen kommen und hier mittels einer Förderschnecke über eine Zellradschleuse zum
Silo gefördert werden. Bei dieser bekannten Vorrichtung
können die gröberen ersten Feststoffe durch den Schleudervorgang des Kreiselgebläses hin und wieder mit dem Staubfilter in Berührung kommen, so dass dieser dadurch leicht
beschädigt werden kann. Ausserdem können diese gröberen

Feu/sp
23.1.1985                                    EU 1 227

- 2 -     0159501

ersten Feststoffe die Zellradschleuse verstopfen, so dass also dann die kontinuierliche Arbeit der Vorrichtung unterbrochen wird.

Es wird die Schaffung einer Vorrichtung bezweckt, mit der die vorerwähnten Nachteile vermieden werden können.

Die erfindungsgemässe Vorrichtung ist dadurch gekennzeichnet, dass der Austrittsstutzen des Kreiselgebläses nach unten gerichtet ist, dass die Drehrichtung des Kreiselgebläses so gewählt ist, dass die vom Luftstrom getragenen Feststoffe vom Austrittsstutzen aus nach unten abgegeben werden und dass an den Austrittsstutzen eine nach unten vorn führende Rinne mit einem bogenförmigen Rinnenteil anschliesst, der dem Bogenzentrum zu hin offen ist und nach vorn zu einer Feststoff-Austragestelle führt.

Bei der erfindungsgemässen Vorrichtung wird nunmehr die Fliehkraftwirkung, der die Feststoffe ausgesetzt sind, dahingehend ausgenutzt, um den gröberen ersten Feststoffen einen solchen gewünschten Bewegungsverlauf zu geben, dass diese nicht mehr auf den Staubfilter auftreffen können und weiterhin diese gröberen ersten Feststoffe, unterstützt durch diese Fliehkraft, zur Feststoff-Austragestelle hin gefördert werden. Hierdurch kann auf die erwähnte in der Auffangrinne liegende bekannte Förderschnecke und die erwähnte Zellradschleuse verzichtet werden. Diese vom Kreiselgebläse auf die gröberen ersten Feststoffe ausgeübte Fliehkraftwirkung kann somit alleine oder zumindest zum grössten Teil zur Förderung dieser Feststoffe zur Austragestelle dienen. Bei dieser Förderung kann noch zusätzlich die Schwerkraft herangezogen werden.

Es ist zwar schon eine Vorrichtung zum Ausscheiden von Feststoffen aus einem als Träger hierfür dienenden Luftstrom bekannt, bei dem ebenfalls die auf die Feststoffe ausgeübte Fliehkraft zur Förderung der gröberen ersten Feststoffe herangezogen wird. Bei dieser bekannten Vorrichtung wird aber ein zusätzlicher Zentrifugator benutzt, der somit die Vorrichtung erheblich verteuert. Diese bekannte Vorrichtung ist relativ gross und konstruktiv aufwendig und arbeitet mit hohen Druckverlustwerten.

In der Zeichnung sind zwei Ausführungsbeispiele des Erfindungsgegenstandes schematisch dargestellt. Es zeigen:

Fig. 1 eine erste Ausführungsform der Vorrichtung in Seitenansicht, und

Fig. 2 eine zweite Ausführungsform der Vorrichtung in Seitenansicht.

Die gezeigten Vorrichtungen haben einen als Kreiselgebläse ausgebildeten Transportventilator 1, dessen Gebläserad in Drehrichtung 2 dreht. Das Kreiselgebläse 1 hat einen Ansaug- oder Eintrittsstutzen 3, zu dem eine Ansaugleitung 4 führt. Es ist weiterhin ein Druck- oder Austrittstutzen 5 vorhanden. Das Kreiselgebläse 1 hat eine bogenförmige Gehäusewand 6.

Der Austrittsstutzen 5 des Kreiselgebläses 1 ist nach unten gerichtet. Die Feststoffe, die von einem als Träger hierfür dienenden Luftstrom getragen werden, treten in Richtung eines Pfeiles 7 in das Kreiselgebläse ein und werden infolge der Drehrichtung 2 vom Austrittsstutzen 5 aus nach unten abgegeben.

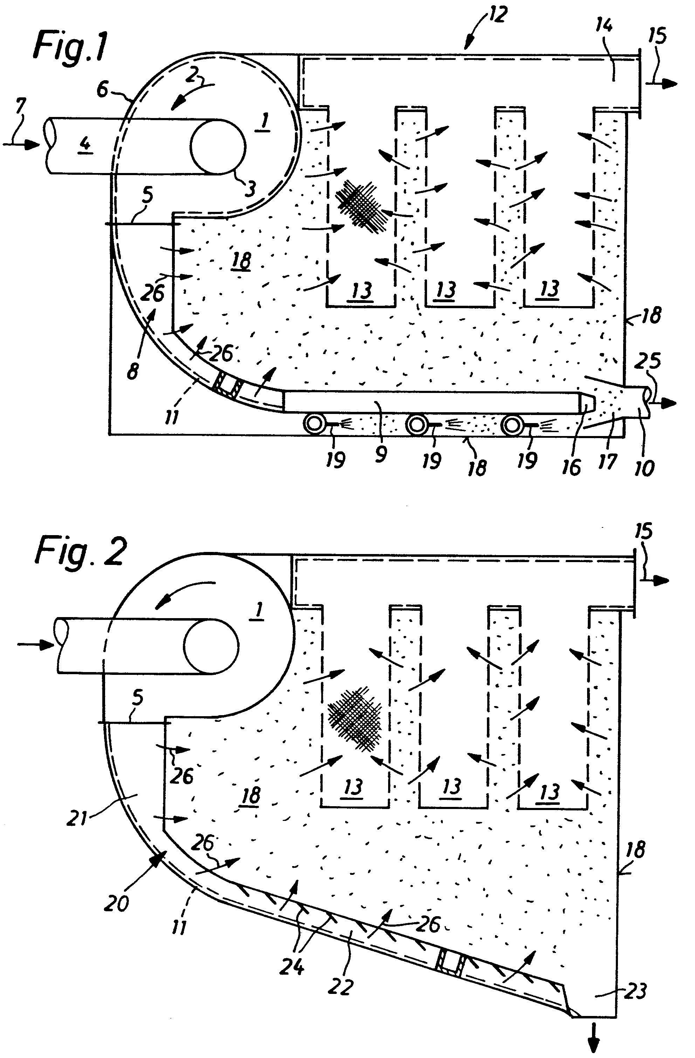

An den Austrittsstutzen 5 schliesst in Fig. 1 eine nach unten und vorn führende Rinne 8 an, die insgesamt bogenförmig ausgebildet ist. An das andere, dem Austrittsstutzen 5 abgewandte Ende der Rinne 8 schliesst eine Rohrleitung 9 an, die nach vorn zu einer Feststoff-Austragstelle 10 führt. Bei der bogenförmigen Rinne 8 ist die Querschnittsfläche gestrichelt dargestellt. Die Rinne 8 hat somit einen Rinnenboden 11 und ist dem Bogenzentrum zu hin offen. Aus Fig. 1 ist ersichtlich, dass der Rinnenboden 11 beim Austrittsstutzen 5 stufenlos in die bogenförmige Gehäusewandung 6 übergeht.

Die Vorrichtung hat einen höher als die Rinne 8 liegenden Staubfilter 12, der Filterschläuche oder Filterpatronen 13 aufweist. In der schematischen Darstellung der Vorrichtung sind drei solcher Schläuche oder Patronen 13 gezeigt. Diese Filterpatronen oder Filterschläuche 13 sind luftdurchlässig, verhindern aber einen Durchgang von feineren zweiten Feststoffen, die vom Luftstrom als Staub getragen werden. Der Staubfilter 12 hat einen Austrittsstutzen 14 für einen gereinigten Luftstromanteil, der in Richtung eines Pfeiles 15 aus der Vorrichtung strömt. Das vordere Ende der Rohrleitung 9 ist mit einer offenen Düse 16 und einem nachfolgenden Diffusor 17 versehen, zum Bilden eines Injektors am vorderen Rohrleitungsende.

Der Staubfilter 12 und zumindest die Rohrleitung 9 liegen in einer geschlossenen Filterkammer 18, wobei die Rohrleitung 9 in Fig. 1 im Bodenbereich dieser Filterkammer 18 liegt. Unterhalb der Rohrleitung 9 befinden sich Luftdüsen 19, die für einen Transport von am Filterkammerboden liegenden feineren zweiten Feststoffen zur Feststoff-Austragestelle 10 dienen. Der Injektor 16, 17 am vorderen Ende der Rohrleitung 9 dient auch für einen Transport der feineren zweiten Feststoffe zur Austragestelle 10.

Bei der Ausbildungsform der Vorrichtung nach Fig. 2 ist die an den Austrittsstutzen 5 anschliessende Rinne 20 anders ausgebildet. Diese Rinne 20 hat einen bogenförmigen Rinnenteil 21 und einen geradlinigen Rinnenteil 22, der nach unten vorn geneigt ist und zur Feststoff-Austragestelle 23 führt. Das Rinnenprofil ist in Fig. 2 ebenfalls wieder gestrichelt dargestellt. Die offene Seite der Rinne 20 ist mit luftdurchlässigen Schikanen 24 versehen, zum Zurückhalten der in der Rinne 20 befindlichen gröberen ersten Feststoffe. Diese Schikanen 24 können z.B. als Leitbleche ausgebildet sein.

Beim Beispiel nach Fig. 2 ist die Rinne 20 in den Boden der Filterkammer 18 integriert, so dass also der Rinnenboden 11 Teil des Filterkammerbodens ist. Die Rinne 20 ist mit ihren beiden Rinnenteilen 21 und 22 zum Innern der Filterkammer zu offen.

Beim Betrieb der Vorrichtung nach Fig. 1 werden alle Feststoffe durch das Gebläserad des Kreiselgebläses 1 nach unten aus dem Austrittsstutzen 5 abgegeben, wobei den gröberen ersten Feststoffen eine erhebliche Geschwindigkeit verliehen wird. Durch die auftretende Fliehkraft werden diese gröberen ersten Feststoffe von der bogenförmigen Gehäusewand 6 des Kreiselgebläses 1 stufenlos in die bogenförmige Rinne 8 gefördert und gelangen von hier durch die anschliessende Rohrleitung 9 zum Diffusor 16, 17 und zur Austragestelle 10. Durch die auf diese gröberen ersten Feststoffe wirkenden Fliehkräfte werden diese gröberen ersten Feststoffe am Boden 11 der Rinne 8 oder an den Rinnenwänden gehalten und können nicht in die Filterkammer 18 austreten. Diese gröberen ersten Feststoffe können somit nicht auf die mechanisch empfindlichen Filterpatronen bzw. Filterschläuche 13 treffen. Unterhalb dieser Filterpatronen oder Filterschläuche werden diese gröberen ersten Feststoffe innerhalb der Rohrleitung 9 gefördert, so dass auch auf dieser Förderstrecke diese gröberen ersten Feststoffe nicht nach oben in die Filterkammer 18 gelangen können. Ein Teil des aus dem Austrittsstutzen 5 austretenden Luftstromes strömt somit mit den gröberen ersten Feststoffen innerhalb der Rohrleitung 9 zum Diffusor 16, 17 und aus der Austragestelle 10 in Richtung eines Pfeiles 25 weg. Der übrige Teil des gesamten Luftstromes tritt an der Rinne 8 in Richtung der Pfeile 26 in die Filterkammer 18 ein und trägt die feineren zweiten Feststoffe (Staub), die sich an den Filterpatronen oder Filterschläuchen 13 des Staubfilters 12 ablagern. Wird der Staubfilter 12 gereinigt, entweder durch einen Gegenluftstrom oder durch einen Rüttelvorgang, fällt der abgelagerte Filterkuchen nach unten auf den Boden der Filterkammer 18 und wird von hier durch die Luftdüsen 19 und den Diffusor 16, 17 zur Austragestelle 10 gefördert.

Beim Beispiel nach Fig. 2 gelangen die gröberen ersten Feststoffe zuerst in den bogenförmigen Rinnenteil 21 der an den Austrittsstutzen anschliessenden Rinne 20 und werden dann entlang des geradlinigen Rinnenteils 22 zur Feststoff-Austragestelle 23 gefördert. Hierzu dient ein Teil des aus dem Austrittsstutzen 5 austretenden Gesamtluftstromes und zusätzlich die Schwerkraft durch die schräge Lage des geradlinigen Rinnenteils 22 nach unten vorn. Der andere Teil des Gesamtluftstroms strömt wieder in Richtung der Pfeile 26 aus der Rinne 20 und fördert die feineren zweiten Feststoffe (Staub) zu den Filterpatronen oder Filterschläuchen 13 des Staubfilters 12. An diesem tritt dann dieser Teilluftstrom in Richtung des Pfeiles 15 aus der Vorrichtung aus. Durch die z.B. als Leitbleche 24 ausgebildeten Schikanen können die gröberen ersten Feststoffe nicht aus der Rinne 20 gelangen und können somit nicht die empfindlichen Filterpatronen oder Filterschläuche 13 beschädigen. Der unterhalb der Filterpatronen oder Filterschläuche 13 liegende Förderweg für die gröberen ersten Feststoffe wird somit beim Beispiel nach Fig. 2 durch die Leitbleche 24 nach oben hin abgedeckt. und beim Beispiel nach Fig. 1 erfolgt die Abdeckung nach oben hin durch das Vorsehen einer Rohrleitung 9.

Durch die erläuterten Ausbildungen der Vorrichtung wird erreicht, dass die gröberen ersten Feststoffe durch Fliehkraftwirkung von den mechanisch empfindlichen Filterpatronen oder Filterschläuchen 13 fern gehalten werden, so dass einerseits diese Filterpatronen oder Filterschläuche mit solchen gröberen ersten Feststoffen gar nicht beladen werden und dass weiterhin diese Filterpatronen oder Filterschläuche 13 einer geringeren mechanischen Beanspruchung durch Feststoffe unterworfen werden.

- 1 -

0159501

Patentansprüche
----------------

1. Vorrichtung zum Ausscheiden von Feststoffen aus einem als Träger hierfür dienenden Luftstrom, mit einem als Kreiselgebläse ausgebildeten Transportventilator (1) für den die Feststoffe tragenden Luftstrom und einer an den Austrittsstutzen (5) des Kreiselgebläses (1) anschliessenden Auffangrinne (8, 20) für gröbere erste Feststoffe und mit einem höher als die Aufangrinne (8, 20) angeordneten Staubfilter (12) für feinere zweite Feststoffe, dadurch gekennzeichnet, dass der Austrittsstutzen (5) des Kreiselgebläses (1) nach unten gerichtet ist, dass die Drehrichtung (2) des Kreiselgebläses so gewählt ist, dass die vom Luftstrom getragenen Feststoffe vom Austrittsstutzen (5) aus nach unten abgegeben werden und dass an den Austrittsstutzen (5) eine nach unten vorn führende Rinne (8, 20) mit einem bogenförmigen Rinnenteil (8, 21) anschliesst, der dem Bogenzentrum zu hin offen ist und nach vorn zu einer Feststoff-Austragestelle (10, 23) führt.

2. Vorrichtung nach Anspruch 1, dadurch gekennzeichnet, dass die Rinne (8, 20) beim Austrittsstutzen (5) mit ihrem bogenförmigen Rinnenteil (8, 21) stufenlos in das bogenförmige Gehäuse (6) des Kreiselgebläses (1) übergeht.

3. Vorrichtung nach Anspruch 1, dadurch gekennzeichnet, dass das andere, dem Austrittsstutzen (5) abgewandte Ende der Rinne (8) an eine Rohrleitung (9) anschliesst, die nach vorn zur Feststoff-Austragestelle (10) führt (Fig. 1).

4. Vorrichtung nach Anspruch 1, dadurch gekennzeichnet, dass die Rinne (20) neben ihrem bogenförmigen Rinnenteil (21) noch zumindest einen geradlinigen Rinnenteil (22) umfasst, der nach unten vorn geneigt ist und zur Feststoff-Austragestelle (23) führt (Fig. 2).

5. Vorrichtung nach Anspruch 3, dadurch gekennzeichnet, dass das vordere Ende der Rohrleitung (9) mit einer offenen Düse (16) und nachfolgendem Diffusor (17) versehen ist zum Bilden eines Injektors (16, 17) am vorderen Rohrleitungsende für einen Transport der feineren zweiten Feststoffe zur Feststoff - Austragestelle (10) (Fig. 1).

6. Vorrichtung nach Anspruch 4, dadurch gekennzeichnet, dass die offene Seite der Rinne (20) mit luftdurchlässigen Schikanen (24) versehen ist, zum Zurückhalten der in der Rinne (20, 22) befindlichen gröberen ersten Feststoffe (Fig. 2).

7. Vorrichtung nach Anspruch 3, dadurch gekennzeichnet, dass die Rohrleitung (9) im Bodenbereich einer Filterkammer (18) liegt, in der sich der Staubfilter (12) befindet, und dass unterhalb der Rohrleitung (9) Luftdüsen (19) für einen Transport von am Filterkammerboden liegenden feineren zweiten Feststoffen zur Feststoff-Austragestelle (10) vorhanden sind (Fig. 1).

8. Vorrichtung nach Anspruch 1, dadurch gekennzeichnet, dass die Rinne (20) in den Boden einer Filterkammer (18) integriert ist, die Rinne (20) zum Innern der Filterkammer (18) zu offen ist und der Staubfilter (12) sich innerhalb der Filterkammer (18) befindet (Fig. 2).

0159501

**Fig.1**

**Fig. 2**